# EUROPEAN PATENT APPLICATION

(11) **EP 3 327 447 A1**
(43) Date of publication of application: **30.05.2018**
(21) Application number: 16201127.4
(22) Date of filing: 29.11.2016
(51) Int. Cl.: G01Q 70/02

(54) **SCANNING PROBE MICROSCOPY SYSTEM, AND METHOD FOR MOUNTING AND DEMOUNTING A PROBE THEREIN**

(71) Applicant: Nederlandse Organisatie voor toegepast- natuurwetenschappelijk onderzoek TNO, 2595 DA 's-Gravenhage (NL)
(72) Inventor: Sadeghian Marnani, Hamed, 2595 DA's- Gravenhage (NL); Bijnagte, Anton Adriaan, 2595 DA's- Gravenhage (NL); Dekker, Albert, 2595 DA's- Gravenhage (NL)
(74) Representative: V.O.

(57) **Abstract**

A scanning probe microscopy system (1) comprises a probe (2), a scanning head (11) having a first probe holder (21), a probe exchange manipulator (12) having a second probe holder (22), a force generating system (31, 32), and a force control system (41, 42) for controlling the force generating system to provide a resultant force (72) acting on the probe. During probe-demounting or probe-mounting the probe is moving (52) from the first probe holder (21) towards the second probe holder (22), or vice versa, respectively, while neither the first probe holder nor the second probe holder is contacting the probe. Said movement of the probe is driven by said resultant force. The invention allows for automatically mounting and demounting of probes with high speed and with high accuracy.

## Description

The invention relates to scanning probe microscopy (SPM), which is a branch of microscopy that forms images of surfaces using a physical probe that scans samples. Many various established types of scanning probe microscopy exist, of which atomic force microscopy (AFM) is one of the most commonly used techniques.

In SPM systems, such as e.g. AFM systems, it is required to frequently exchange a probe, which is mounted to a scanning head of an SPM system, by another probe. For that purpose probe exchange manipulators are used, which can automatically mount probes to scanning heads, as well as automatically demount probes therefrom.

It is an object of the invention to provide a solution according to which mounting/demounting probes relative to scan heads can be automatically performed with high speed and with high accuracy.

For that purpose the invention provides a scanning probe microscopy system according to the attached independent claim 1, as well as a method according to the attached independent claim 3. Preferable embodiments of the invention are provided by the attached dependent claims 2 and 4.

Accordingly, the invention provides a scanning probe microscopy system, comprising a probe, a scanning head having a first probe holder, a probe exchange manipulator having a second probe holder, a force generating system, and a force control system for controlling the force generating system to provide a resultant force acting on the probe in the direction of the first probe holder or in the direction of the second probe holder, wherein the probe exchange manipulator and the scanning head are movable towards and away from one another, and wherein the scanning probe microscopy system is configured, arranged and effective to have:
- a mounted-probe operation condition in which the probe is held against the first probe holder in that said force control system is controlling said resultant force to act on the probe in the direction of the first probe holder, while the probe is not contacting the second probe holder;
- a demounted-probe operation condition in which the probe is held against the second probe holder in that said force control system is controlling said resultant force to act on the probe in the direction of the second probe holder, while the probe is not contacting the first probe holder;
- a probe-demounting operation condition in which the scanning probe microscopy system is switching from its mounted-probe operation condition to its demounted-probe operation condition in that the probe is moving from the first probe holder towards the second probe holder, while neither the first probe holder nor the second probe holder is contacting the probe, wherein said movement of the probe from the first probe holder towards the second probe holder is driven by said resultant force acting on the probe in the direction of the second probe holder under control of said force control system; and
- a probe-mounting operation condition in which the scanning probe microscopy system is switching from its demounted-probe operation condition to its mounted-probe operation condition in that the probe is moving from the second probe holder towards the first probe holder, while neither the first probe holder nor the second probe holder is contacting the probe, wherein said movement of the probe from the second probe holder towards the first probe holder is driven by said resultant force acting on the probe in the direction of the first probe holder under control of said force control system.

Hence, according to the invention, in the probe-demounting operation condition and in the probe-mounting operation condition the probe is performing its transferring movements in a contactless manner in the sense that the probe neither contacts the first probe holder nor contacts the second probe holder. Thanks to this contactless character of the probe's "fly-over" movements, the mounting of the probe to the scan head and the demounting therefrom can be performed with high speed.

Furthermore, in the probe-demounting operation condition and in the probe-mounting operation condition the probe exchange manipulator and the scanning head can be arranged very close to one another in the sense that the fly-over distance over which the probe has to move during a switch between the mounted and demounted-probe operation conditions can be chosen to be very small, such as for example less than 100 micrometer, or preferably less than 20 micrometer. Such a very small fly-over distance avoids the occurrence of any substantial positioning inaccuracy during the probe's fly-over transfer. In other words, the invention allows for high accuracy in aligning the probe relative to the targeted probe holder which is to hold the probe after the probe's fly-over transfer.

It is noted that many various techniques are possible for accurately setting predetermined desirable values of the abovementioned very small fly-over distance over which the probe has to move during a switch between the mounted and demounted-probe operation conditions. For example, during setting movements of the probe exchange manipulator relative to the scanning head various distance measuring techniques can be used based on, e.g., optical principles, capacitive principles, inductive principles, fluid dynamic principles, etc., to control that a predetermined desirable value of said fly-over distance will actually be met.

In a preferable embodiment of a scanning probe microscopy system according to the invention, said resultant force comprises gas pressure force components and/or electrostatic force components and/or magnetic induction force components. The use of gas pressure force action and/or electrostatic force action and/or magnetic induction force action for said resultant force is highly efficient and effective to realize the abovementioned contactless character of the probe's transferring movements, especially at the abovementioned very small scales of the fly-over distances.

In the following, the invention is further elucidated with reference to a non-limiting embodiment of the invention and with reference to the schematic figures in the attached drawing, in which the following is shown.
Fig. 1 shows in a cross-sectional side view an example of an embodiment of a scanning probe microscopy system according to the invention, wherein the scanning probe microscopy system is in its mounted-probe operation condition.
Fig. 2 shows the configuration and view of Fig. 1 again, however wherein this time, starting from the situation of Fig. 1, the scanning probe microscopy system has been brought in its probe-demounting operation condition.
Fig. 3 shows the configuration and view of Fig. 2 again, however wherein this time, starting from the situation of Fig. 2, the scanning probe microscopy system has been brought in its demounted-probe operation condition.
Fig. 4 shows the configuration and view of Fig. 3 again, however wherein this time, starting from the situation of Fig. 3, the scanning probe microscopy system has been brought in its probe-mounting operation condition.

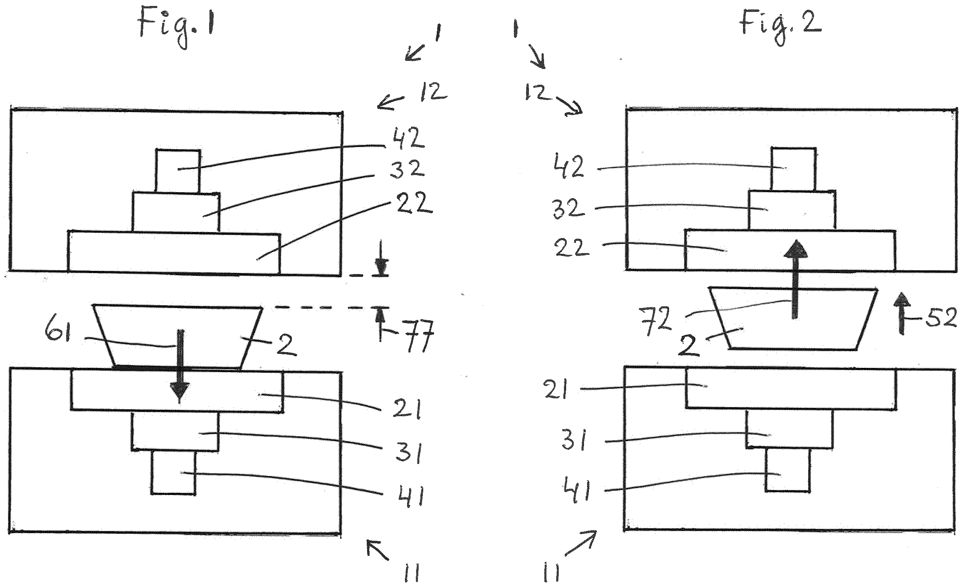

The reference numerals used in Figs. 1-4 are referring to the abovementioned parts and aspects of the invention, as well as to related parts and aspects, in the following manner.
- 1: scanning probe microscopy system (SPM system)
- 2: probe
- 11: scanning head
- 12: probe exchange manipulator
- 21: first probe holder
- 22: second probe holder
- 31, 32: force generating system
- 41, 42: force control system
- 51, 52: movement of the probe
- 61, 62, 71, 72: resultant force acting on the probe
- 77: fly-over distance

Based on the above introductory description, including the brief description of the figures, and based on the above-explained reference numerals used in the figures, the shown example of Figs. 1-4 is for the greatest part readily self-explanatory. In addition to these readily apparent self-explanations, the following extra explanations are given.

In the shown example, the force generating system of the SPM system 1 comprises a first force generating unit 31 and a second force generating unit 32, which have been depicted (highly schematically) at the scanning head 11 nearby the first probe holder 21 and at the probe exchange manipulator 12 nearby the second probe holder 22, respectively. Furthermore, the force control system of the SPM system 1 comprises a first force control unit 41 and a second force control unit 42, which have been depicted (highly schematically) at the scanning head 11 nearby the first probe holder 21 and at the probe exchange manipulator 12 nearby the second probe holder 22, respectively. This has been done in order to illustrate that force generating elements and force control elements of the force generating system and the force control system of an SPM system according to the invention may in general be distributed over the scanning head and the probe exchange manipulator of the SPM system. Alternatively, however, force generating elements and force control elements of the force generating system and the force control system of an SPM system according to the invention may in general also be located at only the scanning head, at only the probe exchange manipulator, and/or at various other parts of the SPM system.

As mentioned, the resultant force provided by the force generating system may for example comprise gas pressure force components and/or electrostatic force components and/or magnetic induction force components.

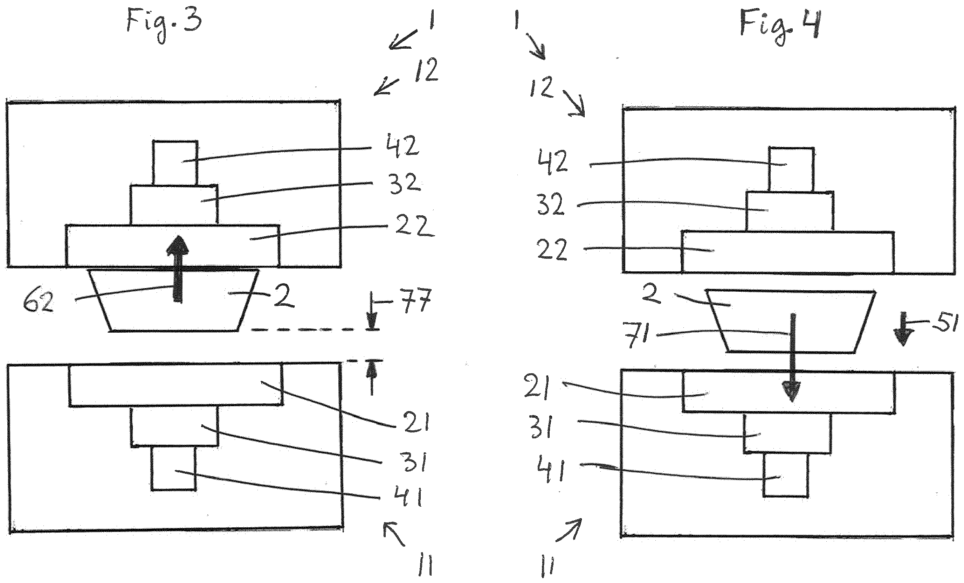

Gas pressure force components, for example, may for example be provided by (vacuum) suction elements and/or by gas blowing elements of the force generating system of the SPM system. In the shown example, each of the first force generating unit 31 and the second force generating unit 32 may for example have suction/blowing elements. For example, in the mounted-probe operation condition of Fig. 1, the resultant force 61 acting on the probe 2 may be formed by vacuum suction provided by the first force generating unit 31 under control of the first force control unit 41. Analogously, in the demounted-probe operation condition of Fig. 3, the resultant force 62 acting on the probe 2 may be formed by vacuum suction provided by the second force generating unit 32 under control of the second force control unit 42. Furthermore, in the probe-demounting operation condition of Fig. 2 the resultant force 72 acting on the probe 2 may be formed by suction forces provided by the second force generating unit 32 under control of the second force control unit 42 and/or by blowing forces provided by the first force generating unit 31 under control of the first force control unit 41. Analogously, in the probe-mounting operation condition of Fig. 4 the resultant force 71 acting on the probe 2 may be formed by suction forces provided by the first force generating unit 31 under control of the first force control unit 41 and/or by blowing forces provided by the second force generating unit 32 under control of the second force control unit 42.

More in general, this makes clear that according to the invention the resultant force provided by the force generating system may generally comprise one or more attraction forces between the probe and the first probe holder or the second probe holder, one or more repulsion forces between the probe and the first probe holder or the second probe holder, as well as combinations of these one or more attraction forces and these one or more repulsion forces. This not only holds for the gas pressure force components, as explained above, but also holds for the mentioned electrostatic force components, for the mentioned magnetic induction force components, and for any other type of force components of the resultant force provided by the force generating system.

## Claims

1. A scanning probe microscopy system (1), comprising a probe (2), a scanning head (11) having a first probe holder (21), a probe exchange manipulator (12) having a second probe holder (22), a force generating system (31, 32), and a force control system (41, 42) for controlling the force generating system to provide a resultant force (61, 62, 71, 72) acting on the probe (2) in the direction of the first probe holder (21) or in the direction of the second probe holder (22), wherein the probe exchange manipulator (12) and the scanning head (11) are movable towards and away from one another, and wherein the scanning probe microscopy system (1) is configured, arranged and effective to have:
- a mounted-probe operation condition in which the probe (2) is held against the first probe holder (21) in that said force control system is controlling said resultant force (61) to act on the probe in the direction of the first probe holder (21), while the probe (2) is not contacting the second probe holder (22);
- a demounted-probe operation condition in which the probe (2) is held against the second probe holder (22) in that said force control system is controlling said resultant force (62) to act on the probe in the direction of the second probe holder (22), while the probe is not contacting the first probe holder (21);
- a probe-demounting operation condition in which the scanning probe microscopy system (1) is switching from its mounted-probe operation condition to its demounted-probe operation condition in that the probe (2) is moving (52) from the first probe holder (21) towards the second probe holder (22), while neither the first probe holder nor the second probe holder is contacting the probe, wherein said movement (52) of the probe from the first probe holder towards the second probe holder is driven by said resultant force (72) acting on the probe in the direction of the second probe holder (22) under control of said force control system; and
- a probe-mounting operation condition in which the scanning probe microscopy system (1) is switching from its demounted-probe operation condition to its mounted-probe operation condition in that the probe (2) is moving (51) from the second probe holder (22) towards the first probe holder (21), while neither the first probe holder nor the second probe holder is contacting the probe, wherein said movement (51) of the probe from the second probe holder towards the first probe holder is driven by said resultant force (71) acting on the probe in the direction of the first probe holder (21) under control of said force control system.

2. A scanning probe microscopy system (1) according to claim 1, wherein said resultant force (61, 62, 71, 72) comprises gas pressure force components and/or electrostatic force components and/or magnetic induction force components.

3. A method for mounting and demounting a probe in a scanning probe microscopy system (1), wherein the scanning probe microscopy system comprises a probe (2), a scanning head (11) having a first probe holder (21), a probe exchange manipulator (12) having a second probe holder (22), a force generating system (31, 32), and a force control system (41, 42) for controlling the force generating system to provide a resultant force (61, 62, 71, 72) acting on the probe (2) in the direction of the first probe holder (21) or in the direction of the second probe holder (22), wherein the probe exchange manipulator (12) and the scanning head (11) are movable towards and away from one another, and wherein the scanning probe microscopy system (1) is configured, arranged and effective to have a mounted-probe operation condition, a demounted-probe operation condition, a probe-demounting operation condition, and a probe-mounting operation condition, and wherein:
- in said mounted-probe operation condition, the probe (2) is held against the first probe holder (21) in that said force control system is controlling said resultant force (61) to act on the probe in the direction of the first probe holder (21), while the probe (2) is not contacting the second probe holder (22);
- in said demounted-probe operation condition, the probe (2) is held against the second probe holder (22) in that said force control system is controlling said resultant force (62) to act on the probe in the direction of the second probe holder (22), while the probe is not contacting the first probe holder (21);
- in said probe-demounting operation condition, the scanning probe microscopy system (1) is switching from its mounted-probe operation condition to its demounted-probe operation condition in that the probe (2) is moving (52) from the first probe holder (21) towards the second probe holder (22), while neither the first probe holder nor the second probe holder is contacting the probe, wherein said movement (52) of the probe from the first probe holder towards the second probe holder is driven by said resultant force (72) acting on the probe in the direction of the second probe holder (22) under control of said force control system; and
- in said probe-mounting operation condition, the scanning probe microscopy system (1) is switching from its demounted-probe operation condition to its mounted-probe operation condition in that the probe (2) is moving (51) from the second probe holder (22) towards the first probe holder (21), while neither the first probe holder nor the second probe holder is contacting the probe, wherein said movement (51) of the probe from the second probe holder towards the first probe holder is driven by said resultant force (71) acting on the probe in the direction of the first probe holder (21) under control of said force control system.

4. A method according to claim 3, wherein said resultant force (61, 62, 71, 72) comprises gas pressure force components and/or electrostatic force components and/or magnetic induction force components.
